# EUROPEAN PATENT SPECIFICATION

(11) **EP 3 715 838 B1**
(45) Date of publication and mention of the grant of the patent: **18.02.2026**
(21) Application number: 18880242.5
(22) Date of filing: 09.08.2018
(51) Int. Cl.: G01V 5/00, G01N 23/04

(54) **VEHICLE-MOUNTED RADIATION INSPECTION SYSTEM**
FAHRZEUGMONTIERTES STRAHLUNGSPRÜFSYSTEM
SYSTÈME D'INSPECTION DE RAYONNEMENT MONTÉ SUR VÉHICULE

(30) Priority: 21.11.2017 CN 201711167368
(43) Date of publication of application: 30.09.2020
(73) Proprietor: Nuctech Company Limited, Beijing 100084 (CN)
(72) Inventor: FAN, Xuping, Beijing 100084 (CN); SONG, Quanwei, Beijing 100084 (CN)
(74) Representative: Meissner Bolte Partnerschaft mbB
(86) International application number: PCT/CN2018/099594
(87) International publication number: WO 2019/100761

(56) References cited:
- CN-A- 1 401 995
- CN-A- 1 490 616
- CN-A- 102 556 185
- CN-A- 105 445 294
- CN-A- 107 991 323
- CN-Y- 2 393 094
- PL-A1- 435 899
- US-A1- 2012 027 172
- US-A1- 2014 185 753

## Description

### Cross-Reference to Related Applications

The present application claims the priority of Chinese Application No. 201711167368.7, filed in the Chinese Patent Office on November 21, 2017, and entitled "VEHICLE-MOUNTED RADIATION INSPECTION SYSTEM".

### Field of the Invention

The present disclosure relates to the technical field of detection, and in particular to a vehicle-mounted radiation inspection system.

### Background of the Invention

In the prior art, a vehicle-mounted radiation inspection system is a mobile scanning detection system. The vehicle-mounted radiation inspection system uses the radiation imaging technology to perform rapid scanning and radioactivity detection on large containers or vehicles, and can identify organic matters and/or inorganic matters. In the vehicle-mounted radiation inspection system, a scanning device and an accelerator (a radiation source) are often installed on a movable vehicle. When the vehicle-mounted radiation inspection system is used for detection, the scanning device can be unfolded to form a scanning channel. The container or vehicle to be detected passes through the scanning channel, and the accelerator can generate rays during the process. The rays pass through the container or vehicle to be detected, and the scanning device receives the rays to form a scanning image. Due to the requirements of radiation protection, an appropriate amount of lead is arranged around a detector in the scanning device, so that the scanning device has a larger self-weight. In order to avoid the balance of the vehicle-mounted radiation inspection system provided with the scanning device, a counterweight for balance must be arranged on a vehicle on which the scanning device is installed. However, the added extra counterweight will further increase the quality and cost of the vehicle-mounted radiation inspection system, damage the flexibility of the vehicle-mounted radiation inspection system, and is not conducive to the rapid changing site of the vehicle-mounted radiation inspection system.

US20140185753 discloses a vehicle-mounted radiation inspection system, including a scanning device and accelerator cabin on opposite sides of the vehicle in a counterweight position. The X-ray source is tilted in a vertical direction in order to allow full coverage of the inspection object. The accelerator cabin and scanning device (boom) may be physically coupled to the vehicle. The document relates to even weight distribution from one side of the vehicle to the other. A connection end of the scanning device appears to be centred on the vehicle roof.

CN102556185 discloses a scanning device and accelerator cabin, opposite from each other with respect to a central axis through the vehicle, which both rotate together with a bearing on the vehicle. A rotation axis line of the accelerator cabin would appear to pass through the center axis line of the vehicle. The document relates to a self-propelled scanning inspection trailer, comprising retractable legs to support the weight of the trailer when in use, which are retracted to allow driving wheels to contact the ground and realize forward and backward movement of the trailer.

US2012027172 discloses rotation of a source platform to counterbalance the weight of the boom. The rotation axis would appear to be the same for the scanning device and the source platform.

### Summary of the Invention

Embodiments of the present disclosure provide a vehicle-mounted radiation inspection system. In a state where a scanning device is in an unfolded state, an accelerator cabin balances the weight of the scanning device by own weight, thereby ensuring the balance of the vehicle-mounted radiation inspection system.

In one aspect, the embodiments of the present disclosure provide a vehicle-mounted radiation inspection system according to claim 1.

The vehicle-mounted radiation inspection system according to the embodiments of the present disclosure includes the scanning device for performing scanning detection an object to be detected and the accelerator cabin capable of emitting rays. When the scanning device is in the unfolded state, it forms the frame-type scanning structure with the vehicle body, and when the object to be detected passes through the frame-type scanning structure, the object to be detected is irradiated by the rays to be scanned and detected. A part of the scanning device is located on one side of the vehicle body and generates a predetermined torque to the vehicle body. When the scanning device is in an unfolded state for detecting, the position of the accelerator cabin is switched to the counterweight position to generate the predetermined torque by own weight. The torque generated by the accelerator cabin and the torque generated by the scanning device are balanced, thereby maintaining the balance of the vehicle-mounted radiation inspection system. The vehicle-mounted radiation inspection system has moving flexibility, and is conducive to detecting the object to be detected anytime and anywhere, thereby having strong adaptability.

### Brief Description of the Drawings

The features, advantages and technical effects of the exemplary embodiments of the present disclosure will be described below with reference to the drawings.
Fig. 1 is a perspective view of a vehicle-mounted radiation inspection system according to one embodiment of the present disclosure;
Fig. 2 is a top view of a vehicle-mounted radiation inspection system according to one embodiment of the present disclosure;
Fig. 3 is a perspective view in a scanning state of a vehicle-mounted radiation inspection system according to one embodiment of the present disclosure;
Fig. 4 is rear view of a vehicle-mounted radiation inspection system according to one embodiment of the present disclosure;
Fig. 5 is a rear view with a local sectional structure of a vehicle-mounted radiation inspection system according to one embodiment of the present disclosure;
Fig. 6 is a partial enlarged drawing of a site B in Fig. 5;
Fig. 7 is a structural schematic diagram of a guide rail in one embodiment of the present disclosure which is not encompassed by the appended claims;
Fig. 8 is a schematic diagram of a sectional structure of a site A-A in Fig. 4;
Fig. 9 is a rear view of a vehicle-mounted radiation inspection system with a lifting bracket according to one embodiment of the present disclosure.

In the drawings, the drawings are not drawn to actual scale.

### Reference Signs:

1. vehicle; 10. cab; 11. vehicle body; 11a. first side; 11b. second side; 111. base; 112. integrated cover; 2. scanning device; 21. vertical supporting arm; 22. horizontal detection arm; 23. vertical detection arm; 3. accelerator cabin; 4. rotating component; 41. rotating ring; 42. fixed ring; 5. driving device; 6. guide rail; 61. rack; 62. gear; 7. first limiting component; 8. second limiting component; 9. lifting bracket; 91. telescopic component; 92. roller; 100. central axis line; S. gravity center.

### Detailed Description of the Embodiments

The embodiments of the present disclosure are described in further detail below with reference to the drawings and embodiments. The detailed description and drawings of the following embodiments are used to exemplarily illustrate the principle of the present disclosure, but cannot be used to limit the scope of the present disclosure, that is, the present disclosure is not limited to the described embodiments.

In the description of the present disclosure, it should be noted that, unless otherwise stated, the meaning of "plurality" is two or more; orientation or positional relationships indicates by terms "upper", "lower", "left", "right", "inner"," outer"," top ","bottom" and the like are only for the convenience of describing the present disclosure and simplifying the description, rather than indicating or implying that the device or element referred to must have a particular orientation or be constructed and operated in a particular orientation, and thus cannot be interpreted as limitations to the present disclosure. In addition, the terms "first", "second" and the like are used for descriptive purposes only, and should not be interpreted as indicating or implying relative importance.

Azimuth words appearing in the following description are directions shown in the drawings, and do not limit the specific structure of the vehicle-mounted radiation inspection system of the present disclosure. In the description of the present disclosure, it should also be noted that the terms "installation", "connected" and "connection" should be understood in a broad sense unless otherwise specified and limited, for example, the connection can be a fixed connection and can also be a detachable connection or an integral connection; and the connection can be a direct connection and can also be a connection via an intermediate medium. For those of ordinary skill in the art, the specific meanings of the above terms in the present disclosure can be understood according to specific situations.

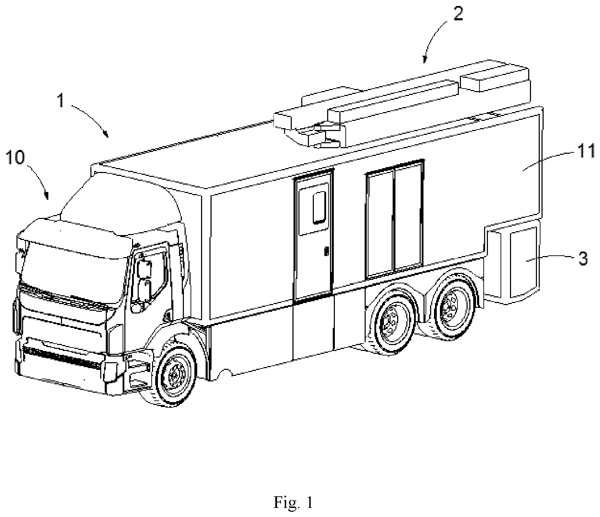

In order to better understand the present disclosure, a vehicle-mounted radiation inspection system according to an embodiment of the present disclosure will be described in detail below with reference to Fig. 1 to Fig. 9.

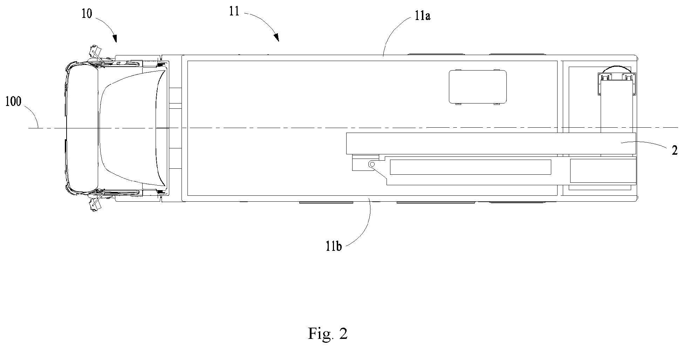

Fig. 1 and Fig. 2 schematically show the structure of the vehicle-mounted radiation inspection system of the present embodiment. As shown in Fig. 1 and Fig. 2, the vehicle-mounted radiation inspection system according to the embodiment of the present disclosure includes a vehicle 1, a scanning device 2 and an accelerator cabin 3. The vehicle 1 has maneuvering capacity and can move on its own to carry the scanning device 2 and the accelerator cabin 3 to reach a destination. The vehicle 1 includes a cab 10 and a vehicle body 11 connected to the cab 10. The vehicle body 11 has a first side 11a and a second side 11b, which are opposite to each other. Optionally, the vehicle body 11 has a predetermined length and a predetermined width, and the first side 11a and the second side 11b are oppositely arranged along the width direction of the vehicle body 11. The scanning device 2 has a connection end. The scanning device 2 is connected to the vehicle body 11 through the connection end. The scanning device 2 has a folded state and an unfolded state. The scanning device 2 is stored on the vehicle body 11 in the folded state. When the scanning device 2 is in the unfolded state, the scanning device 2 extends out from the first side 11a of the vehicle body 11and forms a frame-type scanning structure. The frame-type scanning structure and the accelerator cabin 3 jointly perform scanning detection on an object to be detected. During the process of unfolding the scanning device 2 to form the frame-type scanning structure, a turning torque acting on the vehicle body 11 is generated, so that the entire vehicle 1 has a tendency to tip over toward the first side 11a on the whole.

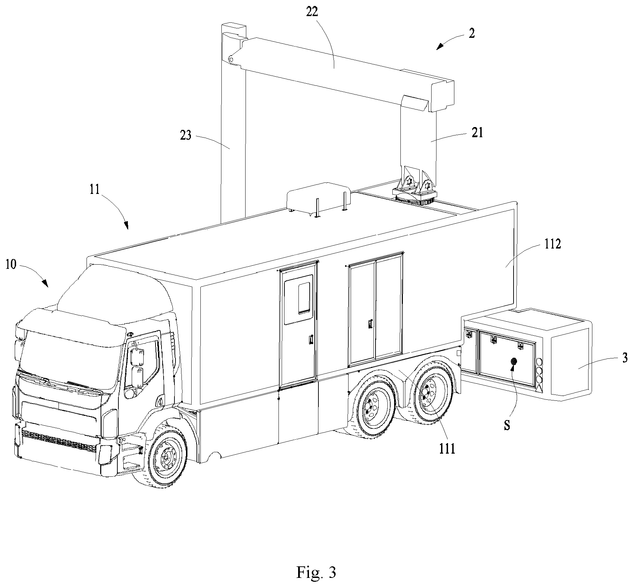

Fig. 3 schematically shows a state in which the scanning device 2 is in the unfolded state and the accelerator cabin 3 is at a counterweight position. As shown in Fig. 3, the scanning device 2 includes a vertical supporting arm 21, a horizontal detection arm 22 and a vertical detection arm 23, which are connected in sequence. A free end of the vertical supporting arm 21 is a connection end. The scanning device 2 is connected to the vehicle body 11 through the free end of the vertical supporting arm 21. The vertical supporting arm 21, the horizontal detection arm 22 and the vertical detection arm 23 have the folded state and the unfolded state. The vertical supporting arm 21 moves from a horizontal state to a vertical state to enable the vertical supporting arm 21, the horizontal detection arm 22 and the vertical detection arm 23 to move from the folded state to the unfolded state. The horizontal detection arm 22 and the vertical detection arm 23 move to the first side 11a of the vehicle body 11, and at this time, the vertical supporting arm 21, the horizontal detection arm 22 and the vertical detection arm 23 form the frame-type scanning structure. The vertical supporting arm 21, the horizontal detection arm 22 and the vertical detection arm 23 belong to large structural members and have relatively large self-weights, therefore, during the unfolding process of the vertical supporting arm 21, the horizontal detection arm 22 and the vertical detection arm 23, the turning torque acting on the vehicle body 11 is gradually increased, such that the tendency of the vehicle 1 to tip over toward the first side 11a is more and more obvious.

In order to prevent the vehicle 1 from tipping over, the vehicle-mounted radiation inspection system in the present embodiment implements counterweight through the accelerator cabin 3 to counteract the turning torque generated when the scanning device 2 is unfolded, thereby maintaining the balance of the vehicle 1, and thus ensuring the balance of the entire vehicle-mounted radiation inspection system. In one example, the accelerator cabin 3 includes a cabin body connected to the vehicle body 11 and an accelerator arranged in the cabin body. The cabin body is of a closed structure, which protects the accelerator. The accelerator is capable of generating rays to perform ray scanning on the object to be detected.

The accelerator cabin 3 in the present embodiment is movably connected to the vehicle body 11. The accelerator cabin 3 at least has a retraction position and a counterweight position. The accelerator cabin 3 is stored on the vehicle body 11 at the retraction position. At the counterweight position, at least a part of the accelerator cabin 3 is located on the second side 11b to maintain the balance of the vehicle body 11 in cooperation with the scanning device 2, thereby maintaining the balance of the vehicle-mounted radiation inspection system as a whole.

After the vehicle-mounted radiation inspection system in the present embodiment moves to the destination under the traction of the vehicle 1, the scanning device 2 is operated to switch from the folded state to the unfolded state. The accelerator cabin 3 is operated to switch from the retraction position to the counterweight position, so as to balance the torque generated by the scanning device 2 through the torque generated by the accelerator cabin 3. In this way, no additional counterweight structure is needed, thereby reducing the weight of the entire vehicle.

The accelerator cabin 3 at the retraction position and the scanning device 2 in the folded state also maintain torque balance, so that the vehicle 1 maintains the balance in a driving process or in a stationary state, and ensures that the safety of the vehicle-mounted radiation inspection system in a moving process or in a parked state.

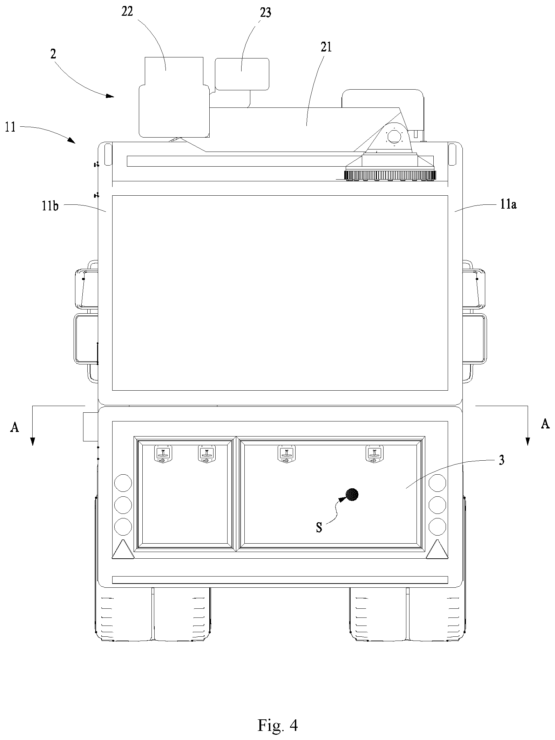

Fig. 4 schematically shows a state in which the accelerator cabin 3 is at the retraction position. As shown in Fig. 4, the accelerator cabin 3 in the present embodiment is directly suspended on the vehicle body 11 and can be switched from the retraction position to the counterweight position, and does not need to be connected to the vehicle body 11 through an additional supporting structure, in this way, the structure of the accelerator cabin 3 is simple and compact, the accelerator cabin can be assembled with the vehicle body 11 easily, and the weight of the vehicle-mounted radiation inspection system is also reduced.

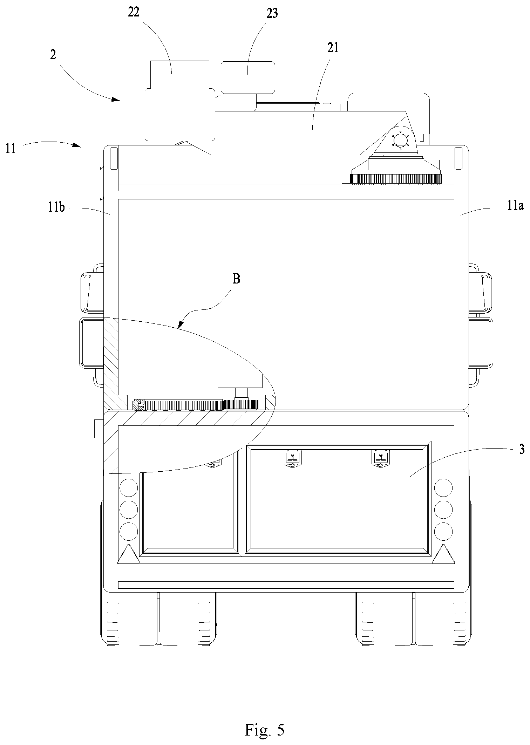

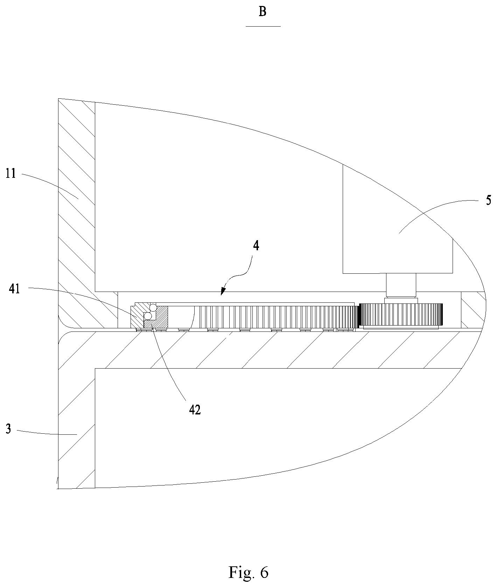

In one embodiment, as shown in Fig. 5 and Fig. 6, the accelerator cabin 3 is horizontally and rotationally connected to the vehicle body 11 through a rotating component 4. The accelerator cabin 3 switches between the retraction position and the counterweight position by its own rotary motion. The rotation axis line of the accelerator cabin 3 is offset from the gravity center thereof. When the accelerator cabin 3 rotates to the counterweight position, the gravity center S of the accelerator cabin 3 is located on the second side 11b of the vehicle body 11.

In one embodiment, the vehicle body 11 has a central axis line 100. The first side 11a and the second side 11b of the vehicle body 11are arranged on both sides of the central axis line 100. According to an example no longer encompassed by the appended claims, the rotation axis line of the accelerator cabin 3 intersects the central axis line 100.

In accordance with the appended claims, the rotation axis line of the accelerator cabin 3 and the connection end of the scanning device 2 are arranged on the both sides of the central axis line 100, so that the rotation axis line of the accelerator cabin 3 and the connection end of the scanning device 2 are separated from the central axis line 100 by predetermined distances. The turning torque generated by the gravity center S of the accelerator cabin 3 at the counterweight position with respect to the central axis line 100 is equal to the turning torque generated by the gravity center of the scanning device 2 in the unfolded state with respect to the central axis line 100, so that the accelerator cabin 3 and the scanning device 2 are in a balanced state, thereby ensuring that the vehicle-mounted radiation inspection system is in the balanced state as a whole.

When the scanning device 2 gradually transitions from the folded state to the unfolded state, the gravity center of the scanning device 2 is gradually moved to the first side 11a of the vehicle body 11, and the perpendicular distance between the gravity center of the scanning device 2 and the central axis line 100 of the vehicle body 11 is gradually increased. At this time, the accelerator cabin 3 can synchronously perform the rotary motion to switch from the retraction position to the counterweight position, so that the gravity center S of the accelerator cabin 3 is gradually moved to the second side 11b of the vehicle body 11, and the perpendicular distance between the gravity center S and the central axis line 100 of the vehicle body 11 is gradually increased, in this way, at any position when the accelerator cabin 3 gradually transitions from the folded state to the unfolded state, the accelerator cabin 3 can generate the same turning torque correspondingly, so as to avoid the tendency of the vehicle body 11 to tip over toward any side to ensure that the vehicle-mounted radiation inspection system is in a self-balancing state in real time and to improve the detection accuracy and the safety during the detection process.

In one example, the vehicle body 11 has a predetermined length and a predetermined width, the central axis line 100 extends along the length direction, and the first side 11a and the second side 11b are oppositely arranged along the width direction. The central axis line 100 is located at an intermediate position between the first side 11a and the second side 11b.

Optionally, the accelerator cabin 3 and the scanning device 2 do not maintain a synchronous motion state. The scanning device 2 can be switched from the folded state to the unfolded state in advance, and then the accelerator cabin 3 is operated to switch the accelerator cabin 3 from the retraction position to the counterweight position. Or, the accelerator cabin 3 can be switched from the retraction position to the counterweight position in advance, and then the scanning device 2 is operated to be switched from the folded state to the unfolded state.

The rotating component 4 in the present embodiment includes a rotating ring 41 and a fixed ring 42, which are arranged to rotate relative to each other. The accelerator cabin 3 is connected to the rotating ring 41. The vehicle body 11 is connected to the fixed ring 42. The rotating ring 41 and the fixed ring 42 are coaxially arranged in a sleeving manner. The rotating component 4 composed of the rotating ring 41 and the fixed ring 42 has good axial bearing capacity, so as to ensure that the accelerator cabin 3 rotates smoothly and horizontally, and its own position does not shift in the vertical direction. One of the rotating ring 41 and the fixed ring 42 is provided with an annular guide rail, and the other is connected to the annular guide rail, so that the relative position between the rotating ring 41 and the fixed ring 42 is not easily shifted, and meanwhile, the frictional resistance therebetween is relatively small, thereby ensuring that the position of the accelerator cabin 3 is stable in the rotation process and improving the position accuracy.

Optionally, the rotating component 4 further includes rolling bodies arranged between the rotating ring 41 and the fixed ring 42. When the rotating ring 41 and the fixed ring 42 are rotationally connected to each other through the rolling body, the frictional resistance is further reduced, and then it is easier to drive the rotating ring 41 to rotate relative to the fixed ring 42.

The vehicle-mounted radiation inspection system in the present embodiment further includes a driving device 5. An output end of the driving device 5 is connected to the rotating ring 41 to drive the rotating ring 41 and the accelerator cabin 3 to perform the rotary motion at the same time. An operator can directly drive the accelerator cabin 3 to perform the rotary motion by controlling the driving device 5, for example, by controlling the driving device 5 remotely and directly in the cab 10. In this way, the automatic control of the rotary motion of the accelerator cabin 3 is realized, so that the personnel can stay away from the accelerator cabin 3, thereby avoiding the radiation from a radiation source and improving the safety in the detection work process.

In one embodiment, the driving device 5 includes a controller, a hydraulic motor, a brake and a transmission structure. The controller controls the start and stop of the hydraulic motor. The brake is used for braking the hydraulic motor in time, when the accelerator cabin 3 is at the retraction position or the counterweight position, so as to prevent the accelerator cabin 3 from exceeding the retraction position or the counterweight position to collide with the vehicle body 11, and the safety of the accelerator cabin 3 is guaranteed as a result. The output end of the transmission mechanism is connected to the rotating ring 41.

Optionally, the output end of the driving device 5 and the rotating ring 41 are gear-driven, chain-driven or belt-driven. Preferably, the output end of the driving device 5 and the rotating ring 41 are gear-driven. The output end of the driving device 5 includes a driving gear, and a plurality of tooth engaged with the driving gear are arranged on the peripheral surface of the rotating ring 41. The transmission accuracy of the gear transmission is high, the transmission process is stable, and good stability in the horizontal rotation process of the accelerator cabin 3 is ensured.

Optionally, the scanning device 2 in the present embodiment is rotatably connected to the vehicle body 11. The scanning device 2 performs the rotary motion and is finally in the unfolded state to form the frame-type scanning structure. When the scanning device 2 includes the vertical supporting arm 21, the horizontal detection arm 22 and the vertical detection arm 23, the free end of the vertical supporting arm 21 is rotatably connected to the vehicle body 11 through a rotary connection member. The vertical supporting arm 21 moves from a horizontal state to a vertical state, and then the vertical supporting arm 21 performs the rotary motion and stops at a predetermined position, and then the horizontal detection arm 22 and the vertical detection arm 23 are unfolded in sequence. The horizontal detection arm 22 and the vertical detection arm 23 are unfolded to the first side 11a of the vehicle body 11, and at this time, the vertical supporting arm 21, the horizontal detection arm 22 and the vertical detection arm 23 form the frame-type scanning structure. When the vertical supporting arm 21 performs the rotary motion, the accelerator cabin 3 can perform the rotary motion synchronously, so that the two maintain synchronous movement and maintain a balanced state in real time.

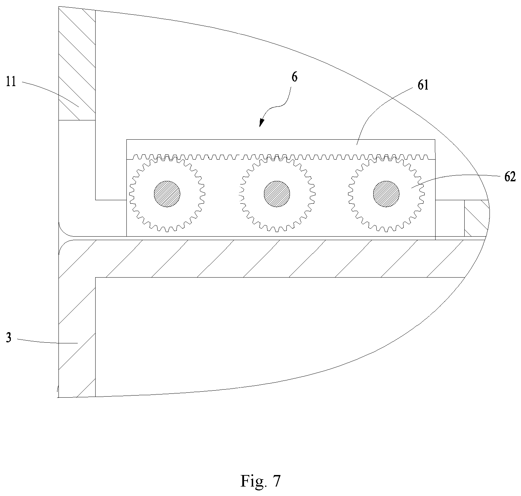

In an example not encompassed by the appended claims, as shown in Fig. 7, the accelerator cabin 3 is connected to the vehicle body 11 in a horizontal movement manner through a guide rail 6. The accelerator cabin 3 moves horizontally to switch between the retraction position and the counterweight position. When the accelerator cabin 3 moves horizontally to the counterweight position, the gravity center S of the accelerator cabin 3 is located on the second side 11b of the vehicle body 11.

The accelerator cabin 3 gradually moves out from the vehicle body 11 in the horizontal movement manner. The movement direction of the accelerator cabin 3 is the same as the side-by-side direction of the first side 11a and the second side 11b. When the accelerator cabin 3 switches from the retraction position to the counterweight position, the accelerator cabin 3 moves horizontally away from the first side 11a, so that the gravity center thereof gradually moves away from the first side 11a.

When the space reserved between the vehicle body 11 and other objects in a direction perpendicular to the movement direction of the accelerator cabin 3 is relatively small, since the accelerator cabin 3 switches the retraction position and the counterweight position in the horizontal movement manner, the accelerator cabin 3 is not affected by the size of the reserved space, and can smoothly switch between the retraction position and the counterweight position, thereby improving the adaptability and the flexibility of the accelerator cabin 3.

Optionally, the guide rail 6 can be replaced with a lead screw transmission pair or a pinion and rack transmission pair.

The vehicle-mounted radiation inspection system in the present embodiment includes a driving device 5. The driving device 5 can drive the accelerator cabin 3 to move horizontally. The operator can directly drive the accelerator cabin 3 to move horizontally by controlling the driving device 5, for example, by controlling the driving device 5 remotely and directly in the cab 10. In this way, the automatic control of the horizontal motion of the accelerator cabin 3 is realized, so that the personnel can stay away from the accelerator cabin 3, thereby avoiding the radiation from the radiation source and improving the safety in the detection work process.

When the guide rail 6 is replaced with a lead screw transmission pair, the lead screw transmission pair includes a screw nut and a screw rod. The nut of the lead screw transmission pair is connected to the accelerator cabin 3, and the screw rod of the lead screw transmission pair is connected to the output end of the driving device 5. The driving device 5 drives the screw rod to rotate, so as to drive the nut and the accelerator cabin 3 to move horizontally along the axial direction of the screw rod. When the guide rail 6 is replaced with a pinion and rack transmission pair, a rack 61 is connected to the accelerator cabin 3, and a gear 62 is arranged at the output end of the driving device 5. The driving device 5 drives the gear 62 to rotate to drive the rack 61 and the accelerator cabin 3 to move horizontally along the length direction of the rack.

Optionally, the scanning device 2 in the present embodiment is connected to the vehicle body 11 in the horizontal movement manner. The scanning device 2 performs horizontal movement and is finally in the unfolded state to form the frame-type structure. When the scanning device 2 includes the vertical supporting arm 21, the horizontal detection arm 22 and the vertical detection arm 23, the free end of the vertical supporting arm 21 is connected to the vehicle body 11 through a horizontal rail. The vertical supporting arm 21 can move horizontally along a horizontal rail. The movement direction of the vertical supporting arm 21 is the same as the side-by-side direction of the first side 11a and the second side 11b. The vertical supporting arm 21 moves from the horizontal state to the vertical state, and then the vertical supporting arm 21 performs the horizontal movement and stops at a predetermined position, and then the horizontal detection arm 22 and the vertical detection arm 23 are unfolded in sequence. The horizontal detection arm 22 and the vertical detection arm 23 are unfolded to the first side 11a of the vehicle body 11, and at this time, the vertical supporting arm 21, the horizontal detection arm 22 and the vertical detection arm 23 form the frame-type scanning structure. When the vertical supporting arm 21 performs the horizontal movement, the accelerator cabin 3 can perform the horizontal movement synchronously, so that the two maintain synchronous movement and maintain the balanced state in real time.

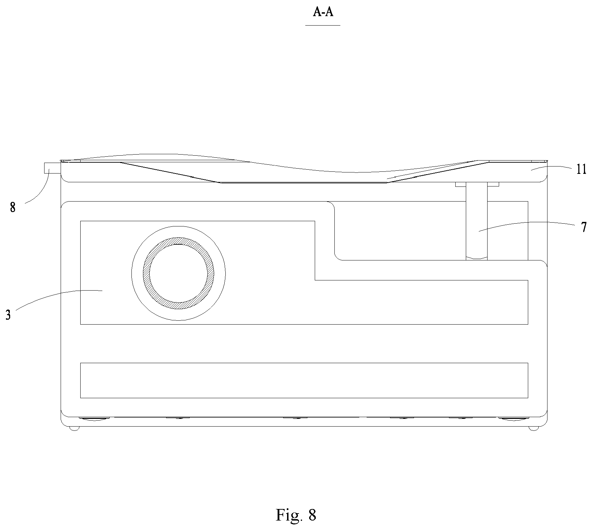

As shown in Fig. 8, the vehicle-mounted radiation inspection system in the present embodiment further includes a first limiting component 7 and a second limiting component 8. The accelerator cabin 3 is limited by the first limiting component 7 at the retraction position and is limited by the second limiting component 8 at the counterweight position. The first limiting component 7 or the second limiting component 8 can ensure that the accelerator cabin 3 accurately moves to the retraction position or the counterweight position, thereby improving the position accuracy, and avoiding that the accelerator cabin 3 passes through the retraction position or the counterweight position, resulting in incorrect return, or damage caused by the collision with the vehicle body 11. The accelerator cabin 3 emits rays toward a specific direction at the counterweight position, so that the requirements for the accuracy of the counterweight position are high, and the second limiting component 8 can ensure that the accelerator cabin 3 is accurately located at the predetermined counterweight position, so that the detection accuracy of the vehicle-mounted radiation inspection system is guaranteed.

The first limiting component 7 and the second limiting component 8 in the present embodiment can be lead limit switches, photoelectric limit switches or mechanical limit switches, which improve the automation degree of the vehicle-mounted radiation inspection system, or can be limiting columns and elastic cushion pads arranged at one ends of the limiting columns. When the first limiting component 7 and the second limiting component 8 are limiting columns, the elastic cushion pads can protect the accelerator cabin 3 and avoid the rigid collision between the accelerator cabin 3 and the limiting columns.

Optionally, the first limiting component 7 and the second limiting component 8 can be arranged on the vehicle body 11 and can also be arranged on the accelerator cabin 3.

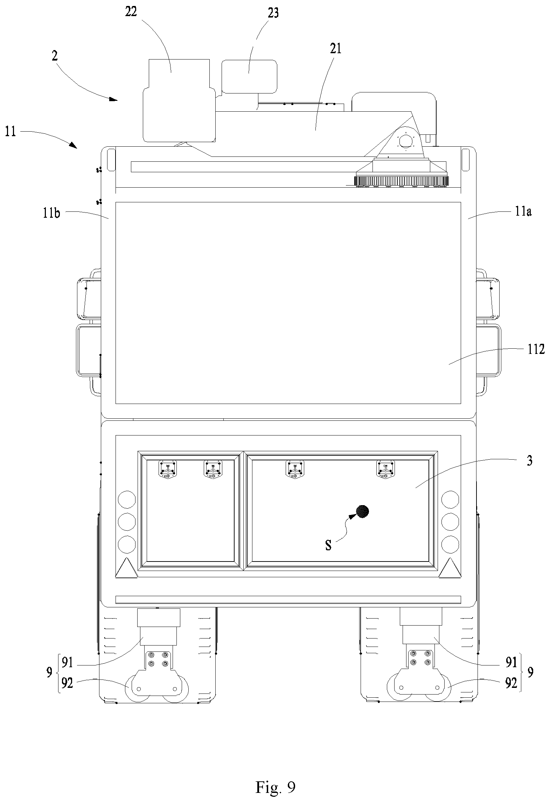

As shown in Fig. 9, the vehicle-mounted radiation inspection system in the present embodiment further includes a lifting bracket 9 arranged below the accelerator cabin 3. The lifting bracket 9 includes a telescopic component 91 connected to the accelerator cabin 3 and a roller 92 arranged at the free end of the telescopic component 91. The telescopic component 91 in the present embodiment can be a multistage hydraulic telescopic rod, and the roller 92 can be a universal wheel. When the accelerator cabin 3 is at the retraction position, the lifting bracket 9 is in a raising state, so that a distance between the roller 92 and a base surface supporting the vehicle-mounted radiation inspection system is maintained, in this way, the vehicle-mounted radiation inspection system is not affected or hindered by the lifting bracket 9 during the movement. When the accelerator cabin 3 is at the counterweight position, the lifting bracket 9 is in the raising state, so that a distance between the roller 92 and the base surface supporting the vehicle-mounted radiation inspection system is maintained, in this way, the accelerator cabin 3 is in a suspended state to generate a predetermined turning torque. When the accelerator cabin 3 switches between the retraction position and the counterweight position, the lifting bracket 9 is in a landing state, so that the roller 92 and the base surface supporting the vehicle-mounted radiation inspection system maintain a contact state, the lifting bracket 9 lifts the accelerator cabin 3 to counteract the gravity of the accelerator cabin 3 and to avoid premature fatigue failure of the joint between the accelerator cabin 3 and the vehicle body 11 due to the long-term suspension movement of the accelerator cabin 3.

The vehicle body 11 in the present embodiment is of an integrated structure, and includes a base 111 and an integrated cover 112 arranged on the base 111. The scanning device 2 is arranged at the top of the integrated cover 112. The accelerator cabin 3 is arranged at the bottom of the integrated cover 112. A recess is arranged at the top of the integrated cover 112, and the scanning device 2 in the folded state is accommodated in the recess. A step structure is arranged at the bottom of the integrated cover 112, and the accelerator cabin 3 at the retraction position is accommodated in a space below the step structure. When the integrated cover 112 has a predetermined length and a predetermined width, the accelerator cabin 3 has the same width as the integrated cover 112 in the width direction of the integrated cover 112. The end face of the integrated cover 112 in the length direction is flush with the outer side face of the accelerator cabin 3, so that the accelerator cabin 3 is completely accommodated at the bottom of the integrated cover 112, thereby ensuring the safety of the accelerator cabin 3, and ensuring a beautiful appearance of an structure formed by the integrated cover 112 and the accelerator cabin 3.

The vehicle-mounted radiation inspection system in the embodiment of the present disclosure is conductive to carrying out scanning detection work anytime and anywhere according to onsite needs, and is flexible, high in adaptability and wide in application range. The vehicle-mounted radiation inspection system achieves the balanced state with the weight of the scanning device 2 by the weight of the accelerator cabin 3. The turning torques of the accelerator cabin 3 and the scanning device 2 acting on the vehicle body 11 are equal in magnitude and opposite in directions, thereby ensuring that the vehicle body 11 does not tip over on either of the first side 11a and the second side 11b, and ensuring the balance of the vehicle-mounted radiation inspection system in the folded state, the unfolded state and in the process of switching from the folded state to the unfolded state of the scanning device 2.

Although the present disclosure has been described with reference to the preferred embodiments, various modifications can be made thereto and the components therein can be replaced with equivalents without departing from the scope of the present disclosure. In particular, as long as there is no structural conflict, various technical features mentioned in the various embodiments can be combined in any manner. The present disclosure is not limited to the specific embodiments disclosed herein, but includes all technical solutions falling within the scope of the claims.

## Claims

1. A vehicle-mounted radiation inspection system, comprising:
a vehicle (1) comprising a vehicle body (11), wherein the vehicle body (11) has a predetermined length and a predetermined width, and the vehicle body (11) has a first side (11a) and a second side (11b), which are opposite to each other along the width direction of the vehicle body (11);
a scanning device (2) comprising a connection end, wherein the scanning device (2) is connected to the vehicle body (11) through the connection end and has a folded state and an unfolded state, and the scanning device (2) is configured to be stored on the vehicle body (11) in the folded state and extend out from the first side (11a) in the unfolded state; and
an accelerator cabin (3) connected to the vehicle body (11), wherein the accelerator cabin (3) at least has a retraction position and a counterweight position, the accelerator cabin (3) is configured to be stored on the vehicle body (11) at the retraction position, and at least a part of the accelerator cabin (3) is configured to be located on the second side (11b) at the counterweight position;
wherein the accelerator cabin (3) is horizontally and rotationally connected to the vehicle body (11) through a rotating component (4), the accelerator cabin (3) is configured to be rotatable to switch between the retraction position and the counterweight position, the rotation axis line of the accelerator cabin (3) is offset from the gravity center (S) thereof, and in a state where the accelerator cabin (3) rotates to the counterweight position, the gravity center (S) of the accelerator cabin (3) is configured to be located on the second side (11b); and
wherein the vehicle body (11) has a central axis line (100), the central axis line (100) extends along the length direction of the vehicle body (11), along the width direction of the vehicle body (11), the first side (11a) and the second side (11b) of the vehicle body (11) are arranged on both sides of the central axis line (100), and the central axis line (100) is located at an intermediate position between the first side (11a) and the second side (11b);
wherein,
along the width direction of the vehicle body (11), the connection end and the rotation axis line of the accelerator cabin (3) are located on both sides of the central axis line (100), so that the rotation axis line of the accelerator cabin (3) and the connection end of the scanning device (2) are separated from the central axis line (100) by predetermined distances.

2. The vehicle-mounted radiation inspection system according to claim 1, wherein the rotating component (4) comprises a rotating ring (41) and a fixed ring (42), which are rotatable relative to each other, the rotating ring (41) is connected to the accelerator cabin (3), and the fixed ring (42) is connected to the vehicle body (11).

3. The vehicle-mounted radiation inspection system according to claim 2, further comprising a driving device, wherein an output end of the driving device is connected to the rotating ring (41) to drive the rotating ring (41) and the accelerator cabin (3) to rotate.

4. The vehicle-mounted radiation inspection system according to claim 3, wherein the output end of the driving device and the rotating ring (41) are gear-driven.

5. The vehicle-mounted radiation inspection system according to any one of claims 1-4, wherein the vehicle body (11) comprises a base (111) and an integrated cover (112) arranged on the base (111), the scanning device (2) is arranged at the top of the integrated cover (112), and the accelerator cabin (3) is arranged at the bottom of the integrated cover (112).

6. The vehicle-mounted radiation inspection system according to any one of claims 1-5, further comprising a first limiting component (7) and a second limiting component (8) arranged on the vehicle body (11), wherein the accelerator cabin (3) is configured to be limited by the first limiting component (7) at the retraction position and by the second limiting component (8) at the counterweight position.

7. The vehicle-mounted radiation inspection system according to any one of claims 1-6, further comprising a lifting bracket (9) arranged below the accelerator cabin (3), wherein the lifting bracket (9) comprises a telescopic component (91) connected to the accelerator cabin (3) and a roller (92) arranged at a free end of the telescopic component (91).

## Patentansprüche

1. Fahrzeugmontiertes Strahlungsprüfungssystem, umfassend:
ein Fahrzeug (1), umfassend eine Fahrzeugkarosserie (11), wobei die Fahrzeugkarosserie (11) eine vorbestimmte Länge und eine vorbestimmte Breite aufweist, und die Fahrzeugkarosserie (11) eine erste Seite (11a) und eine zweite Seite (11b) aufweist, die einander entlang der Breitenrichtung der Fahrzeugkarosserie (11) gegenüberliegen;
eine Abtastvorrichtung (2), umfassend ein Verbindungsende, wobei die Abtastvorrichtung (2) durch das Verbindungsende mit der Fahrzeugkarosserie (11) verbunden ist und einen gefalteten Zustand und einen entfalteten Zustand aufweist, und wobei die Abtastvorrichtung (2) dazu ausgelegt ist, im gefalteten Zustand auf der Fahrzeugkarosserie (11) aufbewahrt zu werden und sich im entfalteten Zustand von der ersten Seite (11a) aus zu erstrecken; und
eine Beschleunigerkabine (3), die mit der Fahrzeugkarosserie (11) verbunden ist, wobei die Beschleunigerkabine (3) wenigstens eine Einfahrposition und eine Gegengewichtsposition aufweist, wobei die Beschleunigerkabine (3) dazu ausgelegt ist, in der Einfahrposition auf der Fahrzeugkarosserie (11) aufbewahrt zu werden, und wobei wenigstens ein Teil der Beschleunigerkabine (3) dazu ausgelegt ist, sich in der Gegengewichtsposition auf der zweiten Seite (11b) zu befinden;
wobei die Beschleunigerkabine (3) horizontal und drehbar mit der Fahrzeugkarosserie (11) durch ein drehendes Bauteil (4) verbunden ist, wobei die Beschleunigerkabine (3) dazu ausgelegt ist, drehbar zu sein, um zwischen der Einfahrposition und der Gegengewichtsposition zu schalten, wobei die Drehachsenlinie der Beschleunigerkabine (3) von deren Schwerpunkt (S) versetzt ist, und in einem Zustand, in dem sich die Beschleunigerkabine (3) in die Gegengewichtsposition dreht, der Schwerpunkt (S) der Beschleunigerkabine (3) dazu ausgelegt ist, sich auf der zweiten Seite (11b) zu befinden; und
wobei die Fahrzeugkarosserie (11) eine Mittelachsenlinie (100) aufweist, wobei die Mittelachsenlinie (100) sich entlang der Längsrichtung der Fahrzeugkarosserie (11) erstreckt, wobei entlang der Breitenrichtung der Fahrzeugkarosserie (11) die erste Seite (11a) und die zweite Seite (11b) der Fahrzeugkarosserie (11) auf beiden Seiten der Mittelachsenlinie (100) angeordnet sind und sich die Mittelachsenlinie (100) auf einer Zwischenposition zwischen der ersten Seite (11a) und der zweiten Seite (11b) befindet;
wobei das Verbindungsende und die Drehachsenlinie der Beschleunigerkabine (3) sich entlang der Breitenrichtung der Fahrzeugkarosserie (11) auf beiden Seiten der Mittelachsenlinie (100) befinden, sodass die Drehachsenlinie der Beschleunigerkabine (3) und das Verbindungsende der Abtastvorrichtung (2) von der Mittelachsenlinie (100) durch vorbestimmte Abstände getrennt sind.

2. Fahrzeugmontiertes Strahlungsprüfungssystem nach Anspruch 1, wobei die drehende Komponente (4) einen drehenden Ring (41) und einen festen Ring (42) umfasst, die bezogen aufeinander drehbar sind, wobei der drehende Ring (41) mit der Beschleunigerkabine (3) verbunden ist und der feste Ring (42) mit der Fahrzeugkarosserie (11) verbunden ist.

3. Fahrzeugmontiertes Strahlungsprüfungssystem nach Anspruch 2, ferner umfassend eine Antriebsvorrichtung, wobei ein Abtriebsende der Antriebsvorrichtung mit dem drehenden Ring (41) verbunden ist, um den drehenden Ring (41) und die Beschleunigerkabine (3) zur Drehung anzutreiben.

4. Fahrzeugmontiertes Strahlungsprüfungssystem nach Anspruch 3, wobei das Abtriebsende der Antriebsvorrichtung und der drehende Ring (41) über ein Getriebe angetrieben werden.

5. Fahrzeugmontiertes Strahlungsprüfungssystem nach einem der Ansprüche 1 bis 4, wobei die Fahrzeugkarosserie (11) ein Unterteil (111) und eine auf dem Unterteil (111) angeordnete integrierte Abdeckung (112) umfasst, wobei die Abtastvorrichtung (2) an der Oberseite der integrierten Abdeckung (112) angeordnet ist und die Beschleunigerkabine (3) am Boden der integrierten Abdeckung (112) angeordnet ist.

6. Fahrzeugmontiertes Strahlungsprüfungssystem nach einem der Ansprüche 1 bis 5, ferner umfassend ein erstes Begrenzungsbauteil (7) und ein zweites Begrenzungsbauteil (8), die an der Fahrzeugkarosserie (11) angeordnet sind, wobei die Beschleunigerkabine (3) dazu ausgelegt ist, in der Einfahrposition durch das erste Begrenzungsbauteil (7) und in der Gegengewichtsposition durch das zweite Begrenzungsbauteil (8) begrenzt zu werden.

7. Fahrzeugmontiertes Strahlungsprüfungssystem nach einem der Ansprüche 1 bis 6, ferner umfassend eine Hubkonsole (9), die unterhalb der Beschleunigerkabine (3) angeordnet ist, wobei die Hubkonsole (9) ein mit der Beschleunigerkabine (3) verbundenes Teleskopbauteil (91) und einen an einem freien Ende des Teleskopbauteils (91) angeordneten Rollenkörper (92) umfasst.

## Revendications

1. Système d'inspection par rayonnement monté sur véhicule, comprenant :
un véhicule (1) comprenant un corps de véhicule (11), dans lequel le corps de véhicule (11) a une longueur prédéterminée et une largeur prédéterminée, et le corps de véhicule (11) présente un premier côté (11a) et un second côté (11b), qui sont opposés l'un à l'autre le long de la direction de largeur du corps de véhicule (11) ;
un dispositif de balayage (2) comprenant une extrémité de raccord, dans lequel le dispositif de balayage (2) est raccordé au corps de véhicule (11) par l'extrémité de raccord et présente un état replié et un état déplié, et le dispositif de balayage (2) est conçu pour être stocké sur le corps de véhicule (11) à l'état replié et s'étendre à partir du premier côté (11a) à l'état déplié ; et
une cabine d'accélérateur (3) raccordée au corps de véhicule (11), dans lequel la cabine d'accélérateur (3) présente au moins une position de rétraction et une position de contrepoids, la cabine d'accélérateur (3) est conçue pour être stockée sur le corps de véhicule (11) dans la position de rétraction, et au moins une partie de la cabine d'accélérateur (3) est conçue pour être située sur le second côté (11b) dans la position de contrepoids ;
dans lequel la cabine d'accélérateur (3) est raccordée horizontalement et en rotation au corps de véhicule (11) par un composant rotatif (4), la cabine d'accélérateur (3) est conçue pour être rotative pour commuter entre la position de rétraction et la position de contrepoids, la ligne d'axe de rotation de la cabine d'accélérateur (3) est décalée par rapport au centre de gravité (S) de celle-ci, et dans un état où la cabine d'accélérateur (3) tourne vers la position de contrepoids, le centre de gravité (S) de la cabine d'accélérateur (3) est conçu pour être situé sur le second côté (11b) ; et
dans lequel le corps de véhicule (11) présente une ligne d'axe central (100), la ligne d'axe central (100) s'étend le long de la direction longitudinale du corps de véhicule (11), le long de la direction de largeur du corps de véhicule (11), le premier côté (11a) et le second côté (11b) du corps de véhicule (11) sont agencés des deux côtés de la ligne d'axe central (100), et la ligne d'axe central (100) est située à une position intermédiaire entre le premier côté (11a) et le second côté (11b) ;
dans lequel, le long de la direction de largeur du corps de véhicule (11), l'extrémité de raccord et la ligne d'axe de rotation de la cabine d'accélérateur (3) sont situées des deux côtés de la ligne d'axe central (100), de sorte que la ligne d'axe de rotation de la cabine d'accélérateur (3) et l'extrémité de raccord du dispositif de balayage (2) soient séparées de la ligne d'axe central (100) par des distances prédéterminées.

2. Système d'inspection par rayonnement monté sur véhicule selon la revendication 1, dans lequel le composant rotatif (4) comprend un anneau rotatif (41) et un anneau fixe (42), qui sont rotatifs l'un par rapport à l'autre, l'anneau rotatif (41) est raccordé à la cabine d'accélérateur (3), et l'anneau fixe (42) est raccordé au corps de véhicule (11) .

3. Système d'inspection par rayonnement monté sur véhicule selon la revendication 2, comprenant en outre un dispositif d'entraînement, dans lequel une extrémité de sortie du dispositif d'entraînement est raccordée à l'anneau rotatif (41) pour entraîner la rotation de l'anneau rotatif (41) et de la cabine d'accélérateur (3).

4. Système d'inspection par rayonnement monté sur véhicule selon la revendication 3, dans lequel l'extrémité de sortie du dispositif d'entraînement et l'anneau rotatif (41) sont entraînés par engrenage.

5. Système d'inspection par rayonnement monté sur véhicule selon l'une quelconque des revendications 1 à 4, dans lequel le corps de véhicule (11) comprend une base (111) et un capot intégré (112) agencé sur la base (111), le dispositif de balayage (2) est agencé au sommet du capot intégré (112), et la cabine d'accélérateur (3) est agencée au fond du capot intégré (112).

6. Système d'inspection par rayonnement monté sur véhicule selon l'une quelconque des revendications 1 à 5, comprenant en outre un premier composant de limitation (7) et un second composant de limitation (8) agencés sur le corps de véhicule (11), dans lequel la cabine d'accélérateur (3) est conçue pour être limitée par le premier composant de limitation (7) à la position de rétraction et par le second composant de limitation (8) à la position de contrepoids.

7. Système d'inspection par rayonnement monté sur véhicule selon l'une quelconque des revendications 1 à 6, comprenant en outre un support de levage (9) agencé sous la cabine d'accélérateur (3), dans lequel le support de levage (9) comprend un composant télescopique (91) raccordé à la cabine d'accélérateur (3) et un rouleau (92) agencé à une extrémité libre du composant télescopique (91).
